Europäisches Patentamt

European Patent Office

Office européen des brevets

(11) Publication number: **0 341 916 B1**

(19)

# EUROPEAN PATENT SPECIFICATION

(12)

(45) Date of publication of patent specification: **09.11.94**

(51) Int. Cl.⁵: **C09D 201/00**

(21) Application number: **89304542.7**

(22) Date of filing: **05.05.89**

The file contains technical information submitted after the application was filed and not included in this specification

(54) **Solvent-based alkyd paints.**

(30) Priority: **11.05.88 GB 8811110**

(43) Date of publication of application:
**15.11.89 Bulletin 89/46**

(45) Publication of the grant of the patent:
**09.11.94 Bulletin 94/45**

(84) Designated Contracting States:
**AT BE CH DE ES FR GR IT LI LU NL SE**

(56) References cited:
FR-A- 2 632 652          GB-A- 691 010
GB-A- 2 090 584          US-A- 3 475 360
US-A- 3 637 580          US-A- 3 977 894

(73) Proprietor: **CROWN BERGER LIMITED**
**P.O. Box 37**
**Crown House**
**Hollins Road**
**GB-Darwen BB3 0BG (GB)**

(72) Inventor: **Knight, Ronald Christopher**
**15 Meadow Way**
**Egerton Bolton BL7 0DE (GB)**
Inventor: **Foley, Michael James**
**87 Ribchester Road**
**Clayton-le-Dale Blackburn, BB1 9HT (GB)**
Inventor: **Graham, Thomas**
**8 Lancaster Drive**
**Clitheroe, BB7 2PB (GB)**

(74) Representative: **Medlock, Edwin Roy**
**c/o Crown Berger Limited,**
**P O Box 37**
**Darween BB3 0BG (GB)**

**Description**

The invention relates to solvent-based alkyd paints having a non-drip character.

Non-drip paints have many advantages which appeal particularly to the D.I.Y. user. They allow heavy brush loading without dripping. Due to the very high level of thixotropy, the high shear (brushing) viscosity which determines the degree of brush drag can be lower than with liquid paints. Thick coatings can be applied to vertical surfaces with little tendency to run or sag due to the recovery of thixotropy preventing flow due to gravity. In a well formulated paint the flow-out of brush-marks occurs immediately after application and before thixotropy sets-in to restrict flow. Because of easy application and low brush drag and the facility to apply uniform heavy coatings, it is normally possible to achieve one-coat cover in all redecoration work.

Paints of the above kind are well known and are characterised by having a resilient (jelly-like) gel structure. The usual procedure for their formation involves the use of chemically (polyamide for example) modified alkyds. These alkyds have the disadvantage that they are generally delivered in a solid state which involves severe handling problems for the paint manufacturer. The widely used polyamide modified thixotropic alkyds are usually heated before use to liquify them. Such heating is avoided, if possible, as it can cause darkening and deterioration and often creates increased fire risk and health problems due to increased emission of solvent.

Resilient gel non-drip paints also suffer from the disadvantage that, if stirred (such as required if separation of liquid has taken place due to syneresis), unattractive lumpiness occurs, as it does during brush loading. Lumpiness can also occur during application of the paint which can make it difficult to achieve a uniform film of paint and a good edge when painting narrow sections such as window frames. In this position many painters, whilst appreciating the non-drip properties, will nevertheless turn to liquid paints, some of which have a low level of thixotropy in the form of a creaminess introduced by various thickening procedures (as referred to later) and hence sacrifice the advantageous features of a non-drip product.

It is an object of the present invention to provide a solvent-based non-drip alkyd paint having an improved structure and usefulness.

The invention includes two known paint thickening techniques which have been used to give a degree of thixotropy to conventional liquid (i.e. paints which will drip) solvent based alkyd paints but in a manner such that an unexpected degree of thixotropy is obtained (a Gel Strength of at least 60 gm. cm., seven days after manufacture) whilst, at the same time, having a non-drip character based on a creamy (non-resilient) structure which flows out well on application and with a low risk of sag even in heavy coatings.

The first thickening technique comprises interacting resins: see, "Thixotropic Alkyd Resin Paints Through Resin Interaction" by W.H. Ellis et al - Journal of Paint Technology Vol. 40, No. 521 dated June 1968. This gives slight thixotropy (see "Introduction" of that reference).

The other thickening technique comprises the use of a clay-based rheology modifier such as a smectite clay for example: see, "Handbook of Coating Additives" edited by Leonard J. Calbo at page 1.

It is of interest to make general mention of known ways of modifying rheology in solvent-based alkyd paints:

Fine particles can aggregate to form structure that modifies the viscosity of liquids in which they are dispersed. Some very fine clays are particularly effective and a number of products in which polar groups are used to enhance their effect are offered commercially as rheology modifiers for use in paints to prevent pigment settling and to impart slight thixotropy. These are typically based on the smectite clays referred to above (bentonites, e.g. montmorillonite; hectorites, etc.) and a typical polar organic modification is a quarternary amine. They are commonly used in solvent based alkyd gloss paints at levels up to about 0.5%. Higher levels e.g. greater than about 2.5% can be used but the thickening effect is not great and cost becomes prohibitive whilst gloss and flow-out of brushmarks becomes unacceptable and incorporation becomes increasingly difficult at high levels.

Other additives are known to thicken solvent based paints, for example, fine particle silicas, but these are efficient matting agents and reduce gloss. Other clay products, e.g. attapulgite clays impart thixotropy when used in the region of 5 - 15% but again are not suitable for gloss paints.

Extender pigments like china clays, used in much higher quantity in low sheen and matt paints can induce thixotropy but, in these quantities, markedly alter the characteristics of the paint.

Hydrogenated castor oils have been used to thicken paints but can fail by causing unexpected "seeding" as the paint ages. Metal soaps, e.g. aluminium stearate has been used to achieve slight thixotropy in alkyd paints.

In fact, it has been possible to impart slight thixotropy into solvent based alkyd paints by several means but the only systems that have been available for the high levels of thixotropy required for non-drip paints without very seriously affecting the paint performance have been by the chemically modified alkyd resin route already referred to. The most widely used chemical modification is with polyamide resins prepared from dimeric fatty acids. Such modifications invariably exhibit resilient gel structure.

Various instruments are used to study the rheology of paints.

The Ferranti-Shirley Cone-Plate Viscometer is capable of applying varying rates of shear and determines the viscosity continuously as the shear rate changes. The shear stress is plotted against the changing R.P.M. of the cone.

The Stormer Viscometer is used according to A.S.T.M. D562-81 Standard Test Method and measures viscosity at a low shear rate by determining the load necessary to cause a rotational frequency of 200 R.P.M. of a standard paddle immersed in the paint at 21°C. Units are given in Kreb Units (K.U.) which is a log function of the measured load.

The Gel Strength is determined on the Sheen/I.C.I. Gel Strength Tester using a paddle 4 cm x 2 cm at 21°C, which measures the point at which the gel breaks as the torque on the paddle, immersed in the paint, is increased. Figures are given in gm. cm. and are measured seven days after manufacture of the paint.

The R.E.L./I.C.I. Cone and Plate Viscometer measures viscosity at 10,000 $sec^{-1}$ at 25°C (ie at high shear rate). Units are given in Pascals (Pa) (converted from Poise). The viscosity is very closely related to brush drag, ie ease of application. If paints are manufactured to a constant R.E.L./I.C.I. Cone and Plate high shear rate viscosity, the Stormer low shear rate viscosity can be used to compare the levels of thixotrophy they exhibit.

The present invention is stated as: a solvent-based alkyd paint which contains a base alkyd resin, an auxiliary alkyd resin and a clay-based rheology modifier characterised in that the resins, and the ratio of the resins to one another, are chosen such that they interact to give an increase in thixotropy level (said thixotropy level increase being measured as an increase in low shear viscosity) when compared with the thixotrophy level of the same paint formulation without the auxiliary alkyd resin and which has been manufactured to the same high shear viscosity; and the rheology modifier is used in an amount to enhance the thixotropy to give a paint that has a non-drip, creamy, non resilient, thixotropic structure of at least 60 gm cm as measured seven days after manufacture on the Sheen / ICI Gel Strength Tester using a paddle 4 cm x 2 cm at 21°C.

The base resin and the auxiliary alkyd resin can each be a single resin or a group of two or more resins.

Typically, the paint may be a gloss paint having 1 - 3% of said modifier and may have non-volatiles in the range of 60 - 80% by weight.

The base to auxiliary alkyd resin ratio may be in the range of 97/3 to 80/20.

The invention is of particular significance for gloss paints, i.e. paints having on the Byk-Mallinckrodt Glossmeter, Single Head (A.S.T.M. D523) a gloss measurement of at least 75% at 60°. As already referred to above in the general mention of known ways of modifying rheology, one would not expect to include more than 0.5% of a clay-based rheology modifier in a gloss paint. Gloss paints which can be applied as one thick non-sag coating are of particular value to the non-professional (D.I.Y.) user. The invention can supply such a paint.

Whilst the Gel Strength of 60 gm. cms., seven days after manufacture, is referred to above (in order to give a straightforward test taken with Table 1, described later) typical rheology figures in the range of 100 to 240 gm. cms. can be expected by the time the paint comes to be used by a painter or decorator.

A range of alkyd based gloss paints was prepared to study the effect on Stormer Viscosity and Gel Strength (both measured seven days after manufacture) when the level of clay-based rheology modifier (Bentone SD3) and the ratio of Base Resin to Auxiliary are varied.

All paints were adjusted to 0.35 Pa viscosity (with White (Mineral) Spirit) using the R.E.L./I.C.I. Cone and Plate Viscometer (Shear rate 10,000 $sec^{-1}$) at 25°C. Bentone SD3 is a typical commercially available clay-based rheology modifier.

Table 1 below shows the results.

## TABLE 1

| % Bentone SD3 | Resin Ratio: | | 100/0 | 95/5 | 90/10 | 85/15 |
|---|---|---|---|---|---|---|
| 0 | Gel Str. | | 0 | 0 | 0 | 0 |
| | Stormer | | 72 | 78 | 79 | 75 |
| 0.5 | Gel Str. | | 0 | 0 | 0 | 0 |
| | Stormer | | 80 | 85 | 88 | 82 |
| 0.8 | Gel Str. | | 0 | 5 | 10 | 10 |
| | Stormer | | 84 | 95 | 99 | 109 |
| 1.0 | Gel Str. | | 0 | 60 | 85 | 65 |
| | Stormer | | 89 | 110 | 115 | 109 |
| 1.5 | Gel Str. | | 5 | 85 | 110 | 90 |
| | Stormer | | 91 | 118 | 130 | 116 |

Units of gel strength are gm. cm.

Units of Stormer Viscosity are Krebs.

"BENTONE SD3" is a registered trade mark.

"Resin Ratio" is the ratio by weight based on resin non-volatile.

Several conclusions may be drawn from Table I.

1. Without Bentone SD3 (first horizontal row) an increase in thixotropy is shown with some alkyd ratios. No Gel Strength obtained.

2. With Base Alkyd only (first vertical column) an increase in thixotropy is shown with increasing Bentone SD3 level. No significant Gel Strength obtained.

3. With higher levels of Bentone SD3 (1% and greater) together with alkyd mixtures, already showing a thickening effect, higher increases in thixotropy and unexpectedly high Gel Strengths are obtained (shaded area).

4. With much higher levels of Bentone SD3, e.g. 3%, it was difficult to incorporate and produced unsatisfactory paints having reduced gloss and very bad brush marking.

N B. Base and auxiliary resin mixtures vary in their thickening effect. Many clay-based rheology modifiers are available and they vary in effectiveness such that one grade might be as much as three times as effective in its thickening effect as another, and they are all very dependent on how well they are dispersed. Examples of white paints according to the present invention will now be given. (All parts by weight and all viscosities checked using the R.E.L./I.C.I. Cone and Plate Viscometer at 25°C with a shear rate of 10,000 sec⁻¹.)

Example 1 - Gloss Paint

| | |
|---|---|
| Titanium dioxide | 900 |
| BENTONE (R.T.M.) SD 1 | 60 |
| Alkyd 'A' (see below) | 1307 |
| Alkyd 'B' (see below) | 136 |
| Calcium drier (10% Calcium) | 23 |
| Cobalt drier (8% Cobalt) | 8.6 |
| White (Mineral) Spirit | 325 |
| Antiskin | 5.6 |
| % Clay-Based Rheology Modifier | 2.2 |
| Viscosity | 0.35 Pa |
| % non-volatile | 74 |
| Gel Strength | 81 gm. cm. |
| Ratio, Resin A:Resin B | 90:10 |

Example 2 - Gloss Paint

| | |
|---|---|
| Titanium dioxide | 1400 |
| BENTONE (R.T.M.) SD 3 | 60 |
| Alkyd 'C' (see below) | 2613 |
| Alkyd 'B' (see below) | 236 |
| Drier Solution | 89 |
| White (Mineral) Spirit | 525 |
| Antiskin | 6 |
| % Clay-Based Rheology Modifier | 1.2 |
| Viscosity | 0.30 Pa |
| % non-volatile | 69 |
| Gel Strength | 95 gm. cm. |
| Ratio, Resin C:Resin B | 90:10 |

Example 3 - Undercoat

| Titanium dioxide | 663 |
|---|---|
| Carbonate Extender | 1000 |
| BENTONE (R.T.M.) SD 3 | 60 |
| Alkyd 'D' (see below) | 1237 |
| Alkyd 'B' (see below) | 112 |
| Calcium drier (10% Calcium) | 17.8 |
| Cobalt drier (8% Cobalt) | 13.2 |
| Antiskin | 4.4 |
| White (Mineral) Spirit | 458 |
| Gel Strength | 126 gm. cm. |
| Ratio, Resin D:Resin B | 90:10 |
| % Clay-Based Rheology Modifier | 1.7 |
| Viscosity | 0.2 Pa |
| % non-volatile | 74 |

Example 4 - Undercoat

| Titanium dioxide | 730 |
|---|---|
| Carbonate extender | 911 |
| BENTONE (R.T.M.) SD 1 | 90 |
| Alkyd 'E' (see below) | 881 |
| Alkyd 'B' (see below) | 66 |
| Calcium drier (10% calcium) | 6.6 |
| Cobalt drier (8% cobalt) | 10.0 |
| Antiskin | 3.9 |
| White (Mineral) Spirit | 448 |
| % Clay-Based Rheology Modifier | 2.8 |
| Viscosity | 0.2 Pa |
| % non-volatile | 71 |
| Gel Strength | 119 gm. cm. |
| Ratio, Resin E:Resin B | 90:10 |

Example 5 - "Eggshell"

| | |
|---|---|
| Titanium dioxide | 750 |
| Carbonate extender | 750 |
| BENTONE (R.T.M.) SD 1 | 50 |
| Alkyd 'A' (see below) | 1210 |
| Alkyd 'B' (see below) | 85 |
| Calcium drier (10% calcium) | 18.6 |
| Cobalt drier (8% cobalt) | 7.1 |
| Antiskin | 5.0 |
| White (Mineral) Spirit | 293 |
| % Clay-Based Rheology Modifier | 1.6 |
| Viscosity | 0.25 Pa |
| % non-volatile | 80 |
| Gel Strength | 78 gm. cm. |
| Ratio, Resin A:Resin B | 93.7 |

ALKYD RESIN

A. Long oil, high solids, fatty acid alkyd, 75% non-volatile.
B. Medium oil, high solids, polyethylene glycol modified alkyd, 80% non-volatile.
C. Long oil, fatty acid alkyd, 65% non-volatile.
D. Long oil, soya oil alkyd, 65% non-volatile.
E. Medium oil length soya alkyd, 50% non-volatile.

Typically properties of the gloss paints described in the Examples 1 and 2 are different from thixotropic gloss paints made from the widely used polyamide modified alkyds and, in fact, from other known paints.

They have the initial appearance in their container of a conventional commercial non-drip alkyd paint. Mild agitation (such as stirring) produces a thick attractive creamy consistency whilst non-drip properties are maintained. The paint may be used equally well as the thick gelled undisturbed product or after agitation.

This difference in the way the viscosity of the new product changes under shear imparts improved properties. The paste-like or cream-like consistency allows heavy loading of the brush with lump-free paint. Since the viscosity of paint according to the invention breaks down smoothly it is easier to distribute the paint uniformly and painting narrow features, e.g. window frames, is easier since there is no tendency to form lumps during application.

The low Cone and Plate viscosity of these paints, 0.2 - 0.35 Pa, (cf. typical viscosity of conventional liquid gloss paint is 0.45 Pa) ensures easy brush application.

Simple variation in formulation allows excellent control between flow-out of brushmarks, gloss and sag resistance on vertical surfaces whereas with known thixotropic paints this presents a difficult compromise.

The above Examples give much better gap-filling properties than other gloss paints, for example, filling a gap (2.0 mm wide) between a beading and a flat surface to which it is attached. In contrast, conventional paints are unlikely to fill gaps even of 1.0 mm width. Further, the above Examples give a non-drip paint having non-volatiles which are high (69 - 80%) when compared with known thixotropic alkyd based non-drip paints (e.g. 55% - 70%).

Similar comments to the above are applicable to the appropriate properties of the Examples of undercoat and eggshell paints given.

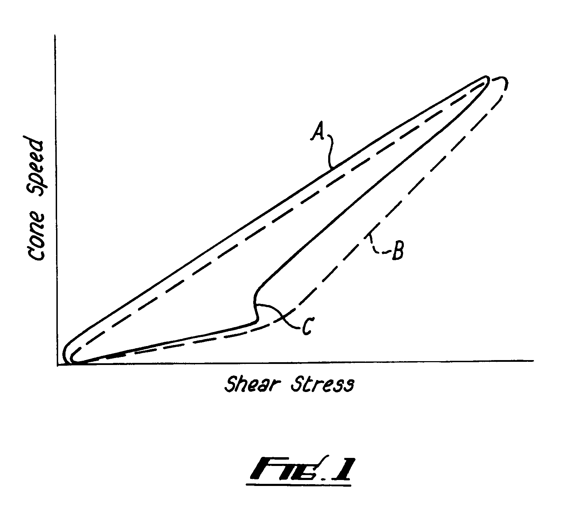

The clear differences between the known jelly-like resilient non-drip paints and the creamy non-resilient non-drip paints of the present invention are observable by considering Fig. 1 of the accompanying drawing which shows typical graphs for both paints obtained from a Ferranti-Shirley Cone-Plate Viscometer relating revolutions per second (R.P.S.) of the cone to the viscosity of the paint.

Graph A (full-line) relates to the known paint, and Graph B (dash-line) relates to a paint according to the invention. It is seen that Graph A possesses a distinct "heel" or "spike" C which represents the Yield Value of the paint as the jelly-like structure breaks down.

In Graph B the spike C is either not present or is so small as not to be readily observed.

**Claims**

1. A solvent based alkyd paint which contains a base alkyd resin, an alkyd auxiliary resin and a clay-based rheology modifier characterised in that the resins, and the ratio of the resins to one another, are chosen such that they interact to give an increase in thixotropy level (said thixotropy level increase being measured as an increase in low shear viscosity) when compared with the thixotropy level of the same paint formulation without the auxiliary alkyd resin and which has been manufactured to the same high shear viscosity; and the rheology modifier is used in an amount to enhance the thixotropy to give a paint that has a non-drip, creamy, non-resilient, thixotropic structure of at least 60 gm cm as measured seven days after manufacture on the Sheen / ICI Gel Strength Tester using a paddle 4 cm x 2 cm at 21 ° C.

2. A paint according to Claim 1 having at least 1% of said modifier.

3. A paint as claimed in claim 1 or 2 which is a gloss paint having 1 - 3% of said modifier.

4. A paint as claimed in Claim 3 having non-volatiles in the range of 60 - 80% by weight.

5. A paint as claimed in Claim 1 having a base to auxiliary alkyd resin ratio in the range of 97/3 to 80/20.

**Patentansprüche**

1. Alkydlack auf Lösungsmittelbasis, welcher ein Basis-Alkydharz, ein Hilfs-Alkydharz und ein Rheologiemodifiziermittel auf Tonbasis enthält, **dadurch gekennzeichnet**, daß die Harze und das Verhältnis der Harze zueinander so gewählt werden, daß sie in Wechselwirkung treten, um eine Zunahme des Thixotropieausmaßes zu ergeben (die Zunahme des Thixotropieausmaßes wird als eine Zunahme der Niedrigscher-Viskosität gemessen), verglichen mit dem Thixotropieausmaß der gleichen Lackformulierung ohne Hilfs-Alkydharz, welche bis zur gleichen Hochscher-Viskosität gefertigt worden ist; und daß das Rheologiemodifiziermittel in einer Menge zur Verstärkung der Thixotropie verwendet wird, um einen Lack zu ergeben, welcher eine nicht tropfende, cremige, nicht elastische, thixotrope Struktur von mindestens 60 gm cm besitzt, gemessen 7 Tage nach der Herstellung auf einem Sheen/ICI Gel-Festigkeitsprüfer unter Verwendung eines Paddels von 4 cm x 2 cm bei 21 ° C.

2. Lack nach Anspruch 1 mit einem Gehalt des Modifiziermittels von mindestens 1%.

3. Lack nach Anspruch 1 oder 2, bei dem es sich um einen Glanzlack mit einem Gehalt des Modifiziermittels von 1-3% handelt.

4. Lack nach Anspruch 3 mit einem Gehalt an nichtflüchtigen Bestandteilen im Bereich von 60-80 Gewichts-%.

5. Lack nach Anpruch 1 mit einem Verhältnis von Basis- zu Hilfs-Alkydharz im Bereich von 97/3 bis 80/20.

**Revendications**

1. Peinture alkyde à base de solvant, qui contient une résine alkyde de base, une résine alkyde auxiliaire et un modificateur de rhéologie à base d'argile, caractérisée en ce que les résines, et le rapport des résines entre elles, sont choisis de telle façon qu'elles entrent en interaction pour donner un accroissement du degré de thixotropie (cet accroissement du degré de thixotropie étant mesuré comme un accroissement de la viscosité sous faible cisaillement) comparativement au degré de thixotropie de la même formulation de peinture sans la résine alkyde auxiliaire et qui a été fabriquée pour offrir la même viscosité sous fort cisaillement ; et le modificateur de rhéologie est utilisé en une quantité apte à accentuer la thixotropie pour produire une peinture ayant une structure thixotrope non résiliente, crémeuse, antigoutte, d'au moins 60 g-cm, telle que mesurée sept jours après la fabrication sur l'appareil d'essai de solidité de gel Sheen/ICI en utilisant une palette de 4 cm × 2 cm à 21 ° C.

2. Peinture selon la revendication 1, contenant au moins 1 % dudit modificateur.

3. Peinture selon la revendication 1 ou 2, qui est une peinture brillante contenant 1 à 3 % dudit modificateur.

4. Peinture selon la revendication 3, contenant 60 à 80 % en poids de substances non volatiles.

5. Peinture selon la revendication 1, ayant un rapport de la résine alkyde de base à la résine alkyde auxiliaire compris dans l'intervalle de 97/3 à 80/20.

FIG.1